# EUROPÄISCHE PATENTSCHRIFT

(11) **EP 3 656 935 B1**
(45) Veröffentlichungstag und Bekanntmachung des Hinweises auf die Patenterteilung: **07.12.2022**
(21) Anmeldenummer: 19210428.9
(22) Anmeldetag: 20.11.2019
(51) Int. Cl.: E03F 5/04, E02D 29/14

(54) **OBERTEIL FÜR EINEN STRASSENABLAUF BESTIMMT, UND EIN STRASSENABLAUF MIT EINEM SOLCHEN OBERTEIL**
UPPER PART FOR A GULLY AND GULLY WITH SUCH UPPER PART
PARTIE SUPÉRIEURE POUR UN AVALOIR AINSI QU'AVALOIR AVEC UNE TELLE PARTIE SUPÉRIEURE

(30) Priorität: 20.11.2018 DE 202018106592 U
(43) Veröffentlichungstag der Anmeldung: 27.05.2020
(73) Patentinhaber: Funke Kunststoffe GmbH, 59071 Hamm-Uentrop (DE)
(72) Erfinder: Funke, Norbert, 48324 Sendenhorst (DE); Funke, Hans Günter, 48324 Sendenhorst (DE)
(74) Vertreter: Habbel, Ludwig

(56) Entgegenhaltungen:
- DE-U1-202017 103 179
- KR-A- 20110 022 368
- US-A1- 2010 147 752

## Beschreibung

Die Erfindung betrifft ein Oberteil, das dazu bestimmt ist, das Oberteil eines Straßenablaufs zu bilden, sowie einen Straßenablauf.

Ein Oberteil für einen Straßenablauf ist aus der DE 20 2016 103 145 U1 bekannt. In einer ersten Richtung, die beispielsweise als Längsrichtung des Oberteils bezeichnet werden kann, sind jeweils an den beiden gegenüberliegenden Enden des Oberteils zweiteilige Distanzelemente vorgesehen. Die am Anschlussstück befindlichen so genannten Anschlussteile dieser Distanzelemente verlaufen im Wesentlichen wie zwei Abschnitte eines nach unten durchhängenden Bogens. Dementsprechend kann das darüber befindliche Auflager mit seinen Auflagerteilen in Art einer Schaukelbewegung in Längsrichtung hin und her bewegt werden, so dass es dabei unterschiedliche, positive oder negative Neigungen in unterschiedlichem Ausmaß in Längsrichtung des Oberteils einnimmt. Wenn die erwähnte Längsrichtung beispielsweise mit der Längsrichtung einer Fahrbahn übereinstimmt, kann auf diese Weise das Oberteil des Straßenablaufs an das Gefälle dieser Fahrbahn angepasst werden.

Aus der DE 20 2017 103 179 U1, die den am nächsten kommenden Stand der Technik bildet, ist ein Oberteil eines Straßenablaufs bekannt, bei dem die Distanzelemente sowohl des Auflagers als auch des Anschlussstücks jeweils eine bogenförmig verlaufende, gezahnte Kontur aufweisen, die miteinander zusammenwirken. Je nachdem, wie diese beiden zusammenwirkenden Zahnbögen ineinandergreifen, kann das Auflager in unterschiedlichen Winkelstellungen zum Anschlussstück ausgerichtet und in dieser Winkelstellung fixiert werden.

Der Erfindung liegt die Aufgabe zugrunde, ein gattungsgemäßes Oberteil dahingehend zu verbessern, dass dieses mit möglichst geringen baulichen Abmessungen, bezogen auf einen bestimmten Durchmesser des zugeordneten Straßenablaufs, verwirklicht werden kann.

Diese Aufgabe wird durch ein Oberteil gemäß Anspruch 1 gelöst. Vorteilhafte Ausgestaltungen sind in den Unteransprüchen beschrieben. Ein vorteilhafter Straßenablauf kann nach Anspruch 9 durch die Verwendung eines derartigen Oberteils geschaffen werden.

Die Erfindung schlägt mit anderen Worten vor, bei der Ausgestaltung des zweiteiligen Distanzelements das am Anschlussstück vorgesehene Anschlussteil nicht ortsfest am Anschlussstück zu befestigen bzw. am Anschlussstück auszuformen, sondern vielmehr als separates Element dieses Anschlussteil gegenüber dem übrigen Anschlussstück verschiebbar anzuordnen. Die Verschiebebewegung erfolgt dabei in einer Richtung, die beispielsweise als Längsrichtung bezeichnet werden kann, um sie von einer quer dazu ausgerichteten zweiten Richtung, der so genannten Querrichtung, zu unterscheiden. Dieses Anschlussteil ist als eine Distanzwange ausgestaltet, die eine nach oben weisende Kontaktfläche bildet, so dass das Auflager mit seinem komplementär dazu ausgestalteten Auflagerteil auf der Distanzwange aufliegt. Die beiden aneinander anliegenden Kontaktflächen der Distanzwange einerseits und des Auflagerteils andererseits verlaufen bogenförmig gewölbt, wobei die Wölbung an der Distanzwange entweder nach oben gebogen, also konvex, verlaufen kann oder auch im Gegensatz dazu nach unten gewölbt verlaufen kann, also konkav. In beiden Fällen kann durch eine Relativbewegung zwischen dem Auflager und der Distanzwange die Schrägstellung des Auflagers, ausgehend von einer exakt horizontalen Mittellage, zur einen oder zur anderen Seite in unterschiedlichen Neigungsgraden eingestellt werden.

Vorschlagsgemäß ist allerdings vorgesehen, dass das Auflager dabei nicht in Längsrichtung zur einen oder zur anderen Seite verschoben wird. Vielmehr kann dadurch, dass die Distanzwange verschiebbar innerhalb des Anschlussstückes angeordnet ist, die Distanzwange verschoben werden, so dass sich daraus zwangsläufig eine dementsprechend geänderte Neigungsausrichtung des Auflagers ergibt. Da bei dieser Art der Verstellung der Aufleger stets praktisch ortsfest verbleibt und nur in seiner Neigung unterschiedlich eingestellt wird, befindet sich die Abflussöffnung des Auflagers stets an derselben Stelle. Verglichen damit, dass Auflager in Längsrichtung hin oder her zu bewegen, um auf diese Weise unterschiedliche Neigungen des Auflagers einzustellen, ist durch die vorschlagsgemäße Ausgestaltung des Oberteils stets eine optimale Ausrichtung der Ablauföffnung des Auflagers über dem Straßenablauf gewährleistet, so dass beispielsweise ein Siebeimer, der zum Zurückhalten von Laub und ähnlichen Verunreinigungen im Straßenablauf vorgesehen ist, stets problemlos eingesetzt oder aus dem Straßenablauf zu Wartungszwecken entnommen werden kann. Im Vergleich zu einer exakt horizontalen Ausrichtung des Auflagers muss eine Vergrößerung der Ablauföffnung nur in einem minimalen Ausmaß erfolgen, verglichen mit einer sehr viel größeren Erweiterung der Ablauföffnung, die erforderlich wäre, wenn die Neigung des Oberteils dadurch eingestellt wird, dass das Oberteil in Längsrichtung hin oder her verschoben wird.

Vorschlagsgemäß kann daher das Oberteil mit möglichst kleinen baulichen Abmessungen hergestellt werden, was sich auf die eingesetzte Materialmenge vorteilhaft auswirkt, nämlich einerseits in ökonomischer Hinsicht, andererseits aber auch bei der Montage durch das geringere zu handhabende Gewicht.

Um das Auflager optimal zu unterstützen und auch die Übertragung höherer Lasten zu gewährleisten, beispielsweise beim Überfahren des Straßenablaufs durch einen LKW, erstreckt sich die Distanzwange unter dem mittleren Bereich des Anschlussteils über wenigstens dessen halbe Seitenlänge in Längsrichtung. Im Vergleich dazu, das Auflager an seinen beiden Enden abzustützen, wird das Auflager daher optimal gegen eine eventuelle Durchbiegung unterstützt. In ersten Versuchen hat sich herausgestellt, dass eine ausreichende Beweglichkeit des Auflagers, um die in der Praxis erforderlichen unterschiedlichen Neigungswinkel einstellen zu können, auch dann noch problemlos gewährleistet werden kann, wenn das Auflager über etwa 80 % seiner Seitenlänge in Längsrichtung durch die Distanzwange unterstützt wird.

Dadurch, dass an beiden Längsseiten des Auflagers eine derartige Distanzwange am Anschlussstück vorgesehen ist, wird das Auflager optimal unterstützt.

Dabei können beispielsweise unterschiedlich hohe Distanzwangen verwendet werden, um auf diese Weise eine Neigung des Auflagers nicht nur in Längsrichtung, sondern auch in Querrichtung zu ermöglichen, beispielsweise in Anpassung an einen gewölbten, so genannten bombierten Querschnittsverlauf der Fahrbahn.

Erfindungsgemäß weist das Oberteil schließlich ein Verriegelungselement auf, das eine formschlüssige Verbindung in Art einer Verzahnung zwischen den beiden Profilierungen bewirkt, so dass sich das Auflager nicht gegenüber dem Anschlussstück verschieben und seine Neigung ändern kann. Die vergleichsweise grobe bzw. großflächige Ausgestaltung der jeweiligen Profilierungen ermöglicht eine hohe mechanische Belastbarkeit des Straßenablauf-Oberteils.

Vorteilhaft kann vorgesehen sein, das Distanzstück nicht unmittelbar auf das Anschlussteil aufzusetzen, sondern vielmehr ein Zwischenstück unter einer Distanzwange anzuordnen. Bei einem solchen Zwischenstück kann es sich beispielsweise um einen länglichen Zwischenstreifen handeln, der unter der gesamten Aufstandsfläche der Distanzwange angeordnet ist, oder es kann sich um mehrere kleinere Zwischenplatten handeln. Jedenfalls wird durch derartige Zwischenstücke eine Höhenanpassung der Distanzwangen ermöglicht.

In einer ersten Ausgestaltung kann vorgesehen sein, dass Zwischenstücke unter beiden Distanzwangen gleich hoch angeordnet sind, so dass auf diese Weise beispielsweise das Niveau angepasst werden kann, in welchem sich das Auflager und später auch die darauf befindliche Abdeckung befinden sollen, um so einen optimal höhengleichen Anschluss an die befahrbare Fahrbahnoberfläche zu ermöglichen. Insbesondere kann später, falls sich die Fahrbahn verdichtet und gesetzt haben sollte, die Entfernung derartiger Zwischenstücke vorgenommen werden, so dass das Oberteil des Straßenablaufs nicht unerwünscht über die Fahrbahnoberfläche nach oben hinausragt.

In einer anderen Ausgestaltung kann vorgesehen sein, dass Zwischenstücke unter beiden Distanzwangen unterschiedlich hoch angeordnet sind. Auf diese Weise kann die bereits angesprochene Querneigung des Auflagers und der darauf befindlichen Abdeckung des Straßenablaufs eingestellt werden. Grundsätzlich kann vorgesehen sein, unter den Distanzwangen entweder unterschiedlich hohe Zwischenstücke anzuordnen, also je nach dem gewünschten Maß, welches die Distanzwange gegenüber dem Anschlussstück erhöht werden soll, ein Zwischenstück mit entsprechender Materialstärke zu verwenden, oder es können mehrere Zwischenstücke unterschiedlicher Materialstärke oder auch gleicher Materialstärke aufeinander angeordnet werden, um auf diese Weise das gewünschte Erhöhungsmaß für die Distanzwange zu erreichen.

Die Distanzwange erstreckt sich, wie oben erwähnt, über wenigstens die Hälfte der Seitenlänge in Längsrichtung des Auflagers. Zusätzlich dazu kann jedoch an den Enden des Auflagers zwischen dem Anschlussstück und dem Auflager die Anordnung von Stützen vorgesehen sein. Auch bei diesen Stützen handelt es sich um separate Elemente, so dass jeweils die Stützen mit entsprechender Höhe verwendet werden können, die an den beiden Enden des Auflagers je nach dessen Längs- und Querneigung erforderlich sind, um den Abstand unterhalb des Auflagers zum Anschlussstück zu überbrücken und so eine besonders stabile und klapperfreie Abstützung des Auflagers am Anschlussstück zu gewährleisten. Insbesondere wenn eine Verzahnung zwischen den Kontaktflächen des Auflagerteils und der Distanzwange vorgesehen ist, ist entsprechend dieser Verzahnung eine Neigungsverstellung des Auflagers in vorbestimmten Schritten möglich, so dass die Stützen dementsprechend perfekt an diese unterschiedlichen, definierten Neigungseinstellungen angepasst sein können und spielfrei zwischen dem Auflager und dem Anschlussstück angeordnet werden können. Ansonsten können die Stützen ggf. mit einem gewissen Spiel zwischen dem Anschlussstück und dem Auflager angeordnet werden, so dass sie immerhin die Absenk- bzw. Eintauchbewegung des Auflagers unter Belastung begrenzen, beispielsweise, wenn das Oberteil von einem Schwerlastfahrzeug überfahren wird.

Vorteilhaft kann das Anschlussstück einen Rahmen aufweisen, der um die Ablauföffnung läuft und nach oben ragt. Dieser Rahmen vereinfacht die Einbringung des vorschlagsgemäßen Oberteils bei der Erstellung einer Fahrbahn aus mehreren Schichten und verhindert beispielsweise, dass fließfähiger Asphalt in das Innere dieses Oberteils eindringen kann. Das Auflager des Oberteils kann bei einer derartigen Ausgestaltung des Anschlussstückes vorteilhaft die liegende Auflagefläche aufweisen, die die Ablauföffnung des Auflagers umgibt und ihrerseits zur Aufnahme der oberen Abdeckung dient. Von dieser liegenden Auflagefläche erstrecken sich nach unten so genannte Füße des Auflagers, die innerhalb des Rahmens in das Anschlussstück eintauchen. Diese Füße verhindern eine unerwünschte Verschiebung des Auflagers, da die Beweglichkeit des Auflagers sowohl in Längsrichtung als auch in Querrichtung durch den Rahmen und die gegen den Rahmen geratenden Füße begrenzt ist.

Eine weitere Führung des Auflagers am Anschlussstück kann vorteilhaft mit Hilfe eines Führungsflügels erfolgen. Solcher Führungsflügel befindet sich an der Längsseite des Auflagers und ragt sowohl nach außen, also seitlich, als auch nach unten, so dass er die Oberkante des Rahmens übergreift, welcher am Anschlussstück vorgesehen ist. Unabhängig davon, ob und wie die oben erwähnten Füße des Auflagers das Auflager innerhalb des Rahmens des Anschlussstücks führen, wird mit den Führungsflügeln eine zuverlässige Festlegung des Auflagers in Querrichtung des Oberteils sichergestellt. Wenn der oben erwähnte fließfähige Asphalt bis an den Rahmen des Anschlussstücks heranreicht und damit auch bis an den Führungsflügel, so ist dies unkritisch, da nach der Einstellung des gewünschten Neigungswinkels die Auflage ja prinzipiell nicht mehr verstellt zu werden braucht.

Insbesondere wenn die Anschlussteile, die jeweils eine von zwei zusammenwirkenden Profilierungen ausmachen, auswechselbar sind, können die unterschiedlichen Neigungen des Auflagers sehr feinstufig eingestellt werden, indem unterschiedliche Anschlussteile eingesetzt werden können, deren Profilierungen an die jeweils gewünschten Neigungen angepasst sind.

Die Auswechselbarkeit eines Anschlussteils kann jedoch besonders vorteilhaft in der Art genutzt werden, dass das Anschlussteil herausnehmbar und in einer anderen Ausrichtung wieder in das Oberteil einsetzbar ist. So können, ausgehend von einer mittleren Position, die Profilierungen zu der einen Seite andere Neigungsgrade ermöglichen als die Profilierungen zu der anderen Seite. Trotz der vergleichsweise groben bzw. großflächigen Ausgestaltung der jeweiligen Profilierungen können daher unterschiedliche Neigungen des Auflagers vergleichsweise kleinen Schritten eingestellt werden, indem das Anschlussteil jeweils in der gewünschten Ausrichtung angeordnet wird.

Ausführungsbeispiele des Standes der Technik und der Erfindung werden anhand der rein schematischen Darstellungen nachfolgend näher erläutert. Dabei zeigt
- Fig. 1: eine perspektivische Ansicht auf ein aus dem Stand der Technik bekanntes Oberteil eines Straßenablaufs, mit entfernter Abdeckung, und wobei das Auflager des Oberteils in Längsrichtung geneigt angeordnet ist,
- Fig. 2: eine Seitenansicht auf das Oberteil von Fig. 1,
- Fig. 3: eine Ansicht ähnlich Fig. 2, wobei das Oberteil jedoch nicht geneigt, sondern horizontal ausgerichtet ist,
- Fig. 4: eine perspektivische Ansicht auf ein Ausführungsbeispiel eines Oberteils nach der Erfindung, wobei das Auflager in Längsrichtung geneigt ist,
- Fig. 5: einen Vertikalschnitt in Längsrichtung durch das Oberteil von Fig.4, wobei das Oberteil horizontal ausgerichtet ist, und
- Fig. 6: eine perspektivische Ansicht ähnlich Fig. 4, wobei jedoch das Oberteil nicht geneigt, sondern horizontal ausgerichtet ist.

In den Zeichnungen ist mit 1 jeweils insgesamt ein Oberteil eines Straßenablaufs bezeichnet, wobei das Oberteil 1 für den späteren Betrieb noch mit einer zusätzlichen Abdeckung versehen wird, die in den Zeichnungen nicht dargestellt ist.

Das Oberteil 1 weist als unteres Bauteil ein Anschlussstück 2 auf, welches an ein Schachtbauwerk des Straßenablaufs anschließt. Auf dem Anschlussstück 2 ist ein zweites, oberes Bauteil des Oberteils 1 angeordnet, welches als Auflager 3 bezeichnet ist, da auf ihm die erwähnte Abdeckung später aufliegen wird.

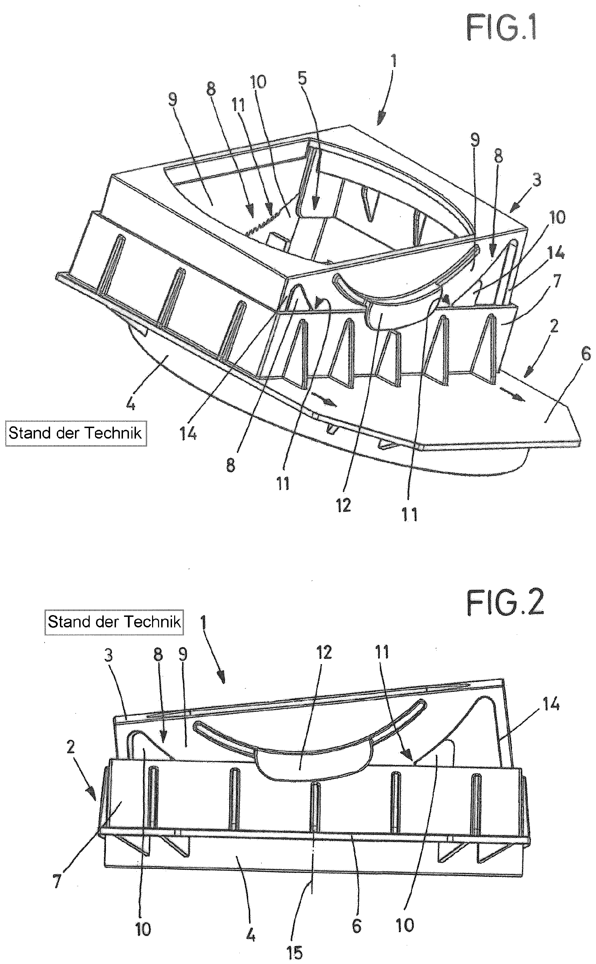

An der Unterseite weist das Anschlussstück 2 einen sich nach unten erstreckenden Dichtkragen 4 auf, mit welchem das Oberteil 1 auf das erwähnte Schachtbauwerk aufgesetzt werden kann. In Fig. 1 ist von dem Dichtkragen 4 eines aus dem Stand der Technik bekannten Oberteils 1 ein äußerer Ring ersichtlich, wobei parallel dazu mit einem geringeren Durchmesser ein zweiter Ring des Dichtkragens 4 vorgesehen ist und so zur Unterseite hin am Anschlussstück 2 eine umlaufende Nut geschaffen ist, in welcher die obere Kante des erwähnten Schachtbauwerks aufgenommen wird.

Das Oberteil 1 weist eine Ablauföffnung 5 auf, durch welche Niederschläge in das erwähnte Schachtbauwerk gelangen können. Hierzu ist die in den Zeichnungen nicht dargestellte Abdeckung mit entsprechenden Durchbrüchen versehen und beispielsweise als Gitter ausgestaltet. Sowohl das obere Auflager 3 als auch das darunter befindliche Anschlussstück 2 weisen jeweils einen Abschnitt dieser Ablauföffnung 5 auf.

Das Anschlussstück 2 weist zudem eine Nivellierplatte 6 auf, von der aus sich ein umlaufender Rahmen 7 nach oben erstreckt, welcher die Ablauföffnung 5 des Anschlussstückes 2 ringsum umgibt. Abweichend von der dargestellten Ausgestaltung kann der Rahmen 7 auch innen am Auflager 3 vorgesehen sein. Gegen die Nivellierplatte 6 ist der Rahmen 7 mit einer Vielzahl von Rippen abgestützt und die Nivellierplatte 6 ist ihrerseits gegen den Dichtkragen 4 mit mehreren Rippen abgestützt, so dass auf diese Weise die Formstabilität des Anschlussstücks 2 sichergestellt ist und die Nivellierplatte 6 als Referenzebene genutzt werden kann, um das Oberteil 1 höhenmäßig korrekt auszurichten. Weiterhin dient die Nivellierplatte 6 als Abstandshalter, um das Oberteil 1 in einer bestimmten Anordnung in Bezug zu einem benachbarten Bordstein zu montieren, welcher die erwähnte Fahrbahn begrenzt. Daher erstreckt sich die Nivellierplatte 6 nicht kragenartig ringsum gleichmäßig um den Rahmen 7, sondern ragt auf einer Seite weiter vom Rahmen 7 weg. Die hier in die Nivellierplatte 6 eingeprägten Pfeile weisen daher in der so genannten Querrichtung vom Oberteil 1 weg, während in einem Winkel von 90° dazu die so genannte Längsrichtung des Oberteils 1 verläuft. Die Längsrichtung des Oberteils 1 fällt mit der Längsrichtung der Fahrbahn zusammen, und die aus Fig. 1 und 2 ersichtliche Schrägstellung des Auflagers 3 ermöglicht eine Anpassung an ein entsprechendes Gefälle dieser Fahrbahn.

Dabei ist in Fig. 1 ersichtlich, dass sich das Auflager 3 des bekannten Oberteils 1 über Distanzelemente 8 gegen das Anschlussstück 2 abstützt und dabei mittels der Distanzelemente 8 die Neigung des Auflagers 3 bestimmt wird. Die Distanzelemente 8 sind jeweils zweiteilig ausgestaltet. Sie weisen einerseits ein oberes, nämlich am Auflager 3 befindliches Auflagerteil 9 auf, welches durch eine entsprechend gebogen verlaufende Seitenwand des Auflagers 3 gebildet wird. Dieses obere Auflagerteil 9 stützt sich auf einem unteren zweiten Teil des jeweiligen Distanzelements 8 ab, welches als Anschlussteil 10 bezeichnet wird, da es am Anschlussstück 2 vorgesehen ist. Diese Anschlussteile 10 können auch jeweils als Distanzwange bezeichnet werden, da sie als eine schmale, aufrecht stehende Wange ausgestaltet sind, deren Oberkante konkav gebogen verläuft und somit komplementär zu den nach unten gewölbt, konvex verlaufenden Unterkanten der Auflagerteile 9 ausgestaltet ist. Weiterhin ist in Fig. 1 ersichtlich, dass die Auflagerteile 9 und die Anschlussteile 10 an ihren jeweiligen Kontaktflächen miteinander gezahnt ausgestaltet sind, wobei die Verzahnung mit 11 gekennzeichnet ist.

Am Auflager 3 sind an dessen beiden Längsseiten Führungsflügel 12 vorgesehen, die sich sowohl nach außen als auch nach unten erstrecken und die Oberkante des Rahmens 7 übergreifen. Abgesehen davon, dass diese Führungsflügel 12 das Auflager 3 in Querrichtung führen, bewirken sie auch eine Lastabtragung, so dass Druckkräfte die von oben auf das Auflager 3 einwirken, nicht nur über die Distanzelemente 8 nach unten auf das Anschlussstück 2 übertragen werden, sondern auch mittels der Führungsflügel 12 auf den Rahmen 7 übertragen werden können, wenn die Führungsflügel 12 derart ausgestaltet sind, dass sie in Kontakt mit der Oberkante des Rahmens 7 kommen.

An den beiden Längsenden des Auflagers 3 weist dieses jeweils nach unten ragende Füße 14 auf, mit denen das Auflager 3 in den Rahmen 7 des Anschlussstücks 2 eintaucht. Dabei ist ersichtlich, dass in Fig. 1 die Anschlussteile 10 innerhalb des Rahmens 7 in Längsrichtung so weit nach links verschoben sind, dass sie an die linken Füße 14 des Auflagers 3 entweder vollständig oder mit einem geringen Spiel angrenzen, während auf der rechten Seite zwischen dem Anschlussteil 10 und dem dort benachbarten Fuß 14 ein maximal großer Abstand verbleibt.

Aufgrund dieser nach links verschobenen Anordnung der Anschlussteile10 innerhalb des Rahmens 7 ist das Auflager 3 in einer maximalen, nach links abfallenden Längsneigung innerhalb des Oberteils 1 angeordnet, wie insbesondere auch aus Fig. 2 ersichtlich ist.

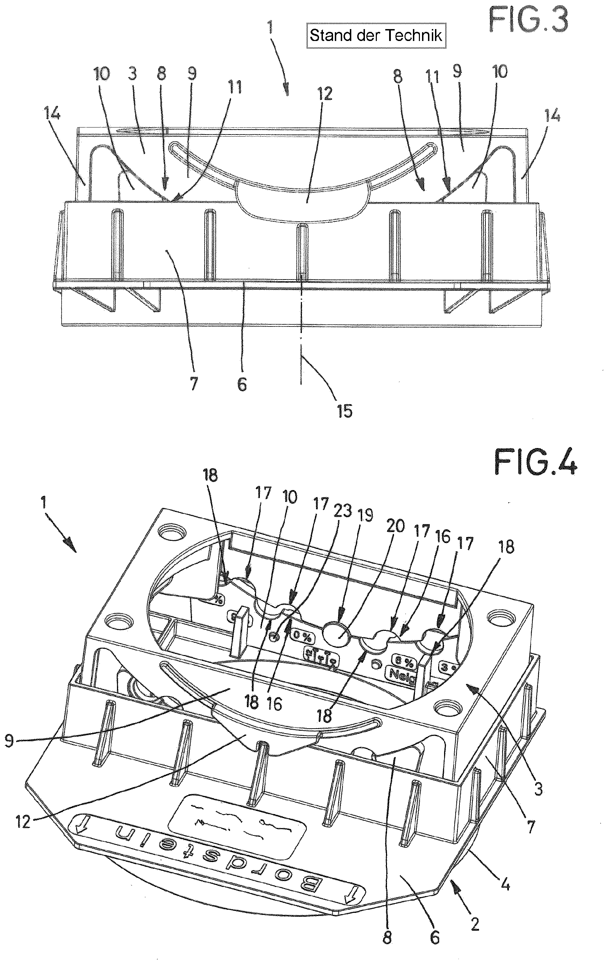

Im Unterschied zu dieser maximalen Neigung ist in Fig. 3 eine Seitenansicht auf das Oberteil 1 dargestellt, die mit Fig. 2 vergleichbar ist, wobei das Auflager 3 jedoch nicht geneigt, sondern horizontal ausnivelliert angeordnet ist.

Dies ist dadurch erreicht, dass die beiden Anschlussteile 10 in Längsrichtung mittig innerhalb des Rahmens 7 angeordnet sind.

Aus dem Vergleich der Fig. 2 und 3 wird deutlich, dass das Auflager 3 stets mittig über einer in den Zeichnungen ersichtlichen Mittellinie 15 angeordnet ist und nicht etwa in Längsrichtung nach rechts oder nach links, je nach Neigung, verschoben wird. Dementsprechend bleibt die Ablauföffnung 5 des Auflagers 3 stets optimal zentriert über dem Schachtbauwerk ausgerichtet.

Je nach Neigung des Anschlussstücks 2 können zwischen den Füßen 14 des Auflagers 3 und der Nivellierplatte 6 des Anschlussstücks 2 noch zusätzliche Stützen angeordnet werden, so dass auch an diesen Stellen eine Kraftübertragung vom Auflager 3 auf das Anschlussstück 2 bei einer Druckbelastung von oben erfolgen kann. Insbesondere, da an den beiden längsseitigen Enden des Auflagers 3 die dortigen Füße 14 jeweils zu einer durchgängigen Stirnwand miteinander verbunden sind, kann durch entsprechend ausgestaltete Stützen eine vergleichsweise großflächige Lastübertragung vom Auflager 3 auf das Anschlussstück 2 erfolgen, so dass die Flächenpressungen und die damit einhergehende Bauteilbelastung möglichst gering gehalten werden kann.

Fig. 4 zeigt ein Ausführungsbeispiel der Erfindung, bei dem - anstelle einer vergleichsweise feinen Verzahnung gemäß der Fig. 1 bis 3 - eine vergleichsweise grobere Verrastung vorgesehen ist, mit welcher die Neigung des Oberteils des Straßenablaufs einstellbar ist. So sind bei dem dargestellten Ausführungsbeispiel lediglich fünf Rastpositionen vorgesehen, wie noch erläutert wird.

Das Oberteil 1 bildet mehrere obere Abschnitte der hier mehreren Rastenaufnahmen aus. Hierzu ist jeweils die Unterseite der seitlichen Auflagerteile 9 des Auflagers 3 als Profilierung 16 mit fünf oberen Einbuchtungen 17 ausgestaltet. Die beiden sich gegenüberliegend angeordneten Anschlussteile 10 weisen an ihren jeweiligen Oberkanten die damit zusammenwirkenden, komplementären Profilierungen 16 auf, welche fünf untere Einbuchtungen 18 als die unteren Abschnitte der Rastenaufnahmen ausbilden.

Die Einbuchtungen 17 und 18 sind in den Profilierungen 16 so versetzt zueinander angeordnet, dass in jeder der vorgesehenen fünf Rastpositionen nur eine einzige der fünf oberen Einbuchtungen 17 nur einer einzigen der fünf unteren Einbuchtungen 18 in der Weise gegenüberliegt, dass diese beiden Einbuchtungen 17 und 18 gemeinsam eine kreisförmige, so genannte Aufnahmekontur 19 schaffen. In diese Aufnahmekontur 19 kann ein Verriegelungselement 20 eingesetzt werden, welches aufgrund seiner flachen Bauform auch als Chip bezeichnet wird und aufgrund seiner Querschnittsform an keiner anderen Stelle zwischen die beiden Profilierungen 16 passt.

Bei dem in Fig. 4 dargestellten Ausführungsbeispiel ist das Verriegelungselement 20 in eine Aufnahmekontur 19 eingelegt, welche eine 12%-Neigung des Auflagers 3 bewirkt. Dementsprechend ist jedem der beiden Anschlussteile 10 die entsprechende untere Einbuchtung 18 mit einem eingeprägten Hinweis "12°" gekennzeichnet. Den Neigungsgraden des Auflagers 3 entsprechend sind bei dem dargestellten Ausführungsbeispiel ähnliche Kennzeichnungen auch an den anderen unteren Einbuchtungen 18 in die Anschlussteile 10 eingeprägt, welche die entsprechenden Schrägstellungen des Auflagers 3 in den unterschiedlichen Neigungen kennzeichnen.

Die gewünschte Einstellung der Neigung des Auflagers 3 erfolgt, indem das Auflager 3 nach oben abgehoben wird, auf beiden Seiten des Oberteils 1 der dortige Chip aus der jeweiligen unteren Einbuchtung 18 des Anschlussteils 10 entnommen und an einer anderen Rastenposition in die dortige untere Einbuchtung 18 eingelegt wird. Das Auflager 3 wird dann in der gewünschten Neigung wieder auf das Anschlussstück 2 aufgelegt.

Der Chip, also das Verriegelungselement 20, bewirkt eine formschlüssige Verbindung in Art einer Verzahnung zwischen den beiden Profilierungen 16, so dass sich das Auflager 3 nicht gegenüber dem Anschlussstück 2 verschieben und seinen Neigung ändern kann.

In dem hier gezeigten Ausführungsbeispiel sind die Profilierungen 16 so ausgestaltet, dass eine Neigungsverstellung des Oberteils 1 möglich ist für 12% und für 9% in einer ersten Kipprichtung, und dass eine Neigungsverstellung für 6% und 3% möglich ist in einer zweiten Kipprichtung. Um alle hier möglichen Neigungsgrade nicht nur für die jeweils eine, sondern für beide Kipprichtungen einstellen zu können, sind die Anschlussteile 10 aus dem Anschlussstück 2 entnehmbar und können - gegeneinander getauscht - auf der jeweils gegenüberliegenden Seite umgekehrt ausgerichtet wieder eingesetzt werden. An den Anschlussteilen 10 vorgesehene Positionsnasen 23 stehen im Eingriff mit dem jeweils benachbarten Distanzelement 8 des Auflagers 3 und stellen sicher, dass die Anschlussteile 10 nur in der korrekten Ausrichtung eingesetzt werden können. Die mittlere 0%-Neigung ergibt sich für beide Einbauvarianten der Anschlussteile 10.

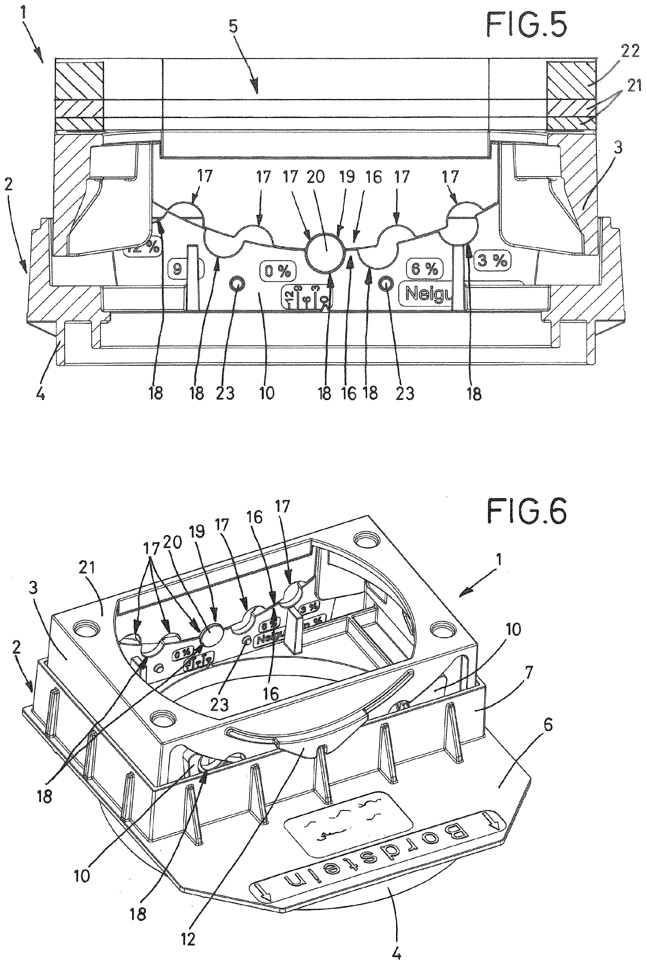

In Fig. 5 ist das Oberteil 1 in einem Vertikalschnitt dargestellt, der längs durch das Oberteil 1 verläuft. Im Unterschied zu Fig. 4 ist das Auflager 3 nicht in einer Schrägstellung gegenüber dem Anschlussstück 2 angeordnet, sondern in seiner "0°"-Ausrichtung, also horizontal ausgerichtet. Durch den Versatz zwischen den oberen Einbuchtungen 17 und den unteren Einbuchtungen 18 ergibt sich, dass bei dieser Ausrichtung des Auflagers 3 eine Aufnahmekontur 19 zwischen den beiden Profilierungen 16 nur zwischen der mittleren oberen Einbuchtung 17 und der mittleren unteren Einbuchtung 18 geschaffen wird. Dementsprechend befindet sich der Chip, der das Verriegelungselement 20 bildet, im Unterschied zu Fig. 4 in der Mitte dieser beiden Profilierungen 16.

Weiterhin zeigt Fig. 5 im Unterschied zu Fig. 4 weitere Bauteile des Oberteils 1: zwei Ausgleichsringe 21 dienen zur Höhenanpassung und sind auf dem Auflager 3 angeordnet. Und auf den Ausgleichsringen 21 liegt eine Abdeckung 22 auf, die als Gussteil ausgestaltet ist, welches einen umlaufenden Rahmen sowie ein von dem Rahmen umgebenes Gitter bildet. Das Oberteil 1 wird typischerweise so montiert, dass sich die Oberseite dieser Abdeckung 22 bündig in einer Ebene mit einer umgebenden Bodenoberfläche befindet, z.B. einer Fahrbahn, einer Pflasterung oder dergleichen, wobei dieses Niveau der Oberseite des Oberteils 1 mittels der Ausgleichsring 21 eingestellt werden kann.

Fig. 6 zeigt das Ausführungsbeispiel der Fig. 4 und 5 in einer perspektivischen Ansicht, wobei sich das Auflager 3 wie in Fig. 5 in seiner horizontalen "0°"-Ausrichtung befindet. Während sich in Fig. 4 kein Ausgleichsring 21 und auch keine Abdeckung 22 auf dem Auflager 3 befindet, ist abweichend von sowohl Fig. 4 als auch Fig. 5 die Anordnung des Oberteils 1 in Fig. 6 mit nur einem einzigen Ausgleichsring 21 und ohne eine Abdeckung 22 dargestellt.

Abweichend von dem dargestellten Ausführungsbeispiel können andere Rastpositionen vorgesehen sein, um das Auflager 3 in anderen als den erwähnten Neigungen relativ zu dem Anschlussstück auszurichten. Insbesondere können unterschiedliche Anschlussteile 10 bereitgestellt werden, bei denen unterschiedliche Profilierungen 16 unterschiedliche Rastpositionen und dementsprechend unterschiedliche Neigungswinkel des Auflagers 3 ermöglichen.

Rein beispielhaft sind die Verriegelungselemente 20 als kreisrunde Chips dargestellt. Davon abweichend können die Verriegelungselemente 20 eine andere Formgebung aufweisen und beispielsweise mehreckig wie z.B. 6-eckig ausgestaltet sein.

### Bezugszeichen:

- 1: Oberteil
- 2: Anschlussstück
- 3: Auflager
- 4: Dichtkragen
- 5: Ablauföffnung
- 6: Nivellierplatte
- 7: Rahmen
- 8: Distanzelement
- 9: Auflagerteil
- 10: Anschlussteil
- 11: Verzahnung
- 12: Führungsflügel
- 14: Füße
- 15: Mittellinie
- 16: Profilierung
- 17: obere Einbuchtungen
- 18: untere Einbuchtungen
- 19: Aufnahmekontur
- 20: Verriegelungselement
- 21: Ausgleichsring
- 22: Abdeckung
- 23: Positionsnase

## Patentansprüche

1. Oberteil (1), das dazu bestimmt ist, das Oberteil eines Straßenablaufs zu bilden,
mit einem unteren an ein Schachtbauwerk des Straßenablaufs anschließbaren Anschlussstück (2), und mit einem oberen Auflager (3), das zur Aufnahme einer Abdeckung bestimmt ist,
wobei das Anschlussstück (2) und das Auflager (3) jeweils eine Ablauföffnung (5) umgeben,
und wobei sich Distanzelemente (8) zwischen dem Anschlussstück (2) und dem Auflager (3) um die Ablauföffnung (5) verteilt befinden,
welche das Anschlussstück (2) und das Auflager (3) höhenmäßig voneinander beabstandet halten,
derart, dass das Anschlussstück (2) und das Auflager (3) in unterschiedlichen Winkelstellungen zueinander festlegbar sind,
und wobei die Distanzelemente (8) jeweils zwei Teile aufweisen,
von denen ein als Anschlussteil (10) bezeichnetes Teil am Anschlussstück (2) und ein als Auflagerteil (9) bezeichnetes Teil am Auflager (3) angeordnet ist,
und die einander mit Kontaktflächen anliegen,
wobei die Kontaktflächen zusammen eine Kontaktlinie beschreiben, welche im Wesentlichen gebogen von einem Mittelpunkt zu zwei Enden verläuft, die demgegenüber in einer anderen Höhe angeordnet sind, wobei ein Anschlussteil (10) als eine Distanzwange ausgestaltet ist, welche eine nach oben weisende Fläche aufweist, welche die Kontaktfläche des Anschlussteils (10) bildet,
wobei das Anschlussteil (10) sich unter dem mittleren Bereich des Auflagers (9) über wenigstens dessen halbe Seitenlänge in einer ersten, als Längsrichtung bezeichneten Richtung erstreckt,
und wobei die Anschlussteile (10) als separate, in Längsrichtung verschiebbare Elemente im Anschlussstück (2) angeordnet sind,
**dadurch gekennzeichnet, dass** das Oberteil ein Verriegelungselement (20) umfasst, und
dass die Kontaktflächen des Auflagerteils (9) und des Anschlussteils (10) in der Art komplementär zueinander profiliert sind,
dass in unterschiedlichen Winkelstellungen, die das Auflager (3) gegenüber dem Anschlussstück (2) einnimmt, obere Einbuchtungen (17) des Auflagerteils (9) und untere Einbuchtungen (18) des Anschlussteils (10) eine gemeinsame Aufnahmekontur (19) schaffen, in welche das Verriegelungselement (20) einsetzbar ist.

2. Oberteil nach Anspruch 1,
**dadurch gekennzeichnet,**
**dass** ein Zwischenstück unter einem Anschlussteil (10) angeordnet ist.

3. Oberteil nach Anspruch 2,
**dadurch gekennzeichnet,**
**dass** Zwischenstücke unter beiden Anschlussteilen (10) gleich hoch angeordnet sind.

4. Oberteil nach Anspruch 2,
**dadurch gekennzeichnet,**
**dass** Zwischenstücke unter beiden Anschlussteilen (10) unterschiedlich hoch angeordnet sind.

5. Oberteil nach einem der vorhergehenden Ansprüche,
**dadurch gekennzeichnet,**
**dass** die Profilierungen (16) des Auflagerteils (9) und des Anschlussteils (10) jeweils mehrere Einbuchtungen (17, 18) schaffen und in der Art versetzt zueinander angeordnet sind,
**dass** in unterschiedlichen Winkelstellungen des Auflagers (3) gegenüber dem Anschlussstück (2) jeweils nur eine einzige obere Einbuchtung (17) eines Auflagerteils (9) und eine einzige untere Einbuchtung (18) eines Anschlussteils (10) eine Aufnahmekontur schaffen.

6. Oberteil nach einem der vorhergehenden Ansprüche,
**dadurch gekennzeichnet,**
**dass** zusätzlich zu den erwähnten Distanzelementen (8) Stützen an den Enden des Auflagers (3) zwischen dem Anschlussstück (2) und dem Auflager (3) angeordnet sind.

7. Oberteil nach einem der vorhergehenden Ansprüche,
**dadurch gekennzeichnet,**
**dass** das Anschlussstück (2) einen um die Ablauföffnung (5) umlaufenden, nach oben ragenden Rahmen (7) aufweist,
und das Auflager (3) eine liegende Auflagefläche aufweist sowie sich davon nach unten erstreckende Füße (14), die innerhalb des Rahmens in das Anschlussstück (2) eintauchen.

8. Oberteil nach Anspruch 7,
**dadurch gekennzeichnet,**
**dass** an den Längsseiten des Auflagers (3) jeweils ein Führungsflügel (12) nach außen und nach unten ragt und die Oberkante des am Anschlussstück (2) befindlichen Rahmens (7) übergreift.

9. Straßenablauf, mit einem nach einem der vorhergehenden Ansprüche ausgestalteten Oberteil (1).

## Claims

1. Upper part (1) that is designed to form the upper part of a gully, having a bottom connecting member (2) that can be connected to a shaft structure of the gully and having an upper support (3) that is designed to receive a cover, where the connecting member (2) and the support (3) each surround a gully opening (5) and where spacer elements (8) are arranged around the gully opening (5) between the connecting member (2) and the support (3) and keep the connecting member (2) and the support (3) apart from each other vertically in such a way that the connecting member (2) and the support (3) can be fixed at different angular positions relative to each other and where each of the spacer elements (8) has two parts of which one part that is described as the connecting part (10) is arranged on the connecting member (2) and one part that is described as the support part (9) is arranged on the support (3), and which rest against each other by means of contact faces, where the contact faces together form a contact line that extends essentially in a curve from a middle point to two ends that are arranged opposite at a different height from it, where a connecting part (10) is designed as a spacer cheek that incorporates a face that is oriented upwards and forms the contact face of the connecting part (10), where the connecting part (10) extends under the middle section of the support (9) over at least half of the length of its side in a first direction that is described as a longitudinal direction and where the connecting parts (10) are arranged as separate longitudinally displaceable elements in the connecting member (2), **characterised in that** the upper part incorporates a locking element (20), and **in that** the contact faces of the supporting part (9) and the connecting part (10) are complementarily profiled in such a way that in different angular positions that the support (3) takes up relative to the connecting member (2) upper recesses (17) in the support part (9) and lower recesses (18) in the connecting part (10) form a common receiving contour (19) into which the locking element (20) can be inserted.

2. Upper part in accordance with claim 1, **characterised in that** an intermediate piece is arranged under a connecting part (10).

3. Upper part in accordance with claim 2, **characterised in that** intermediate pieces are arranged at the same height under both connecting parts (10).

4. Upper part in accordance with claim 2, **characterised in that** intermediate pieces are arranged at different heights under both connecting parts (10).

5. Upper part in accordance with any one of the foregoing claims, **characterised in that** the profiles (16) of the support part (9) and the connecting part (10) each form a number of recesses (17, 18) and are arranged out of alignment with each other in such a way that in each of the different angular positions of the support (3) relative to the connecting member (2) only one upper recess (17) in a support part (9) and one lower recess (18) in a connecting part (10) form a receiving contour.

6. Upper part in accordance with any one of the foregoing claims, **characterised in that** in addition to the aforementioned spacer elements (8) props are arranged at the ends of the support (3) between the connecting member (2) and the support (3).

7. Upper part in accordance with any one of the foregoing claims, **characterised in that** the connecting member (2) incorporates a frame (7) that extends around the gully opening (5) and projects upwards and the support (3) incorporates a horizontal support surface and feet (14) that extend downwards from it into the connecting member (2) inside the frame.

8. Upper part in accordance with claim 7, **characterised in that** on each of the longitudinal sides of the support (3) a guide plate (12) projects outwards and downwards and over the upper edge of the frame (7) that is located on the connecting member (2).

9. Gully having an upper part (1) that is designed in accordance with any one of the foregoing claims.

## Revendications

1. Partie supérieure (1) destinée à former la partie supérieure d'un avaloir, comprenant une pièce de raccordement (2) inférieure raccordable à un ouvrage en forme de puits de l'avaloir, et un palier d'appui (3) supérieur destiné à recevoir un couvercle, sachant que la pièce de raccordement (2) et le palier d'appui (3) entourent chacun une ouverture (5) d'avaloir, et sachant que des éléments d'écartement (8) se trouvent répartis autour de l'ouverture (5) de l'avaloir, entre la pièce de raccordement (2) et le palier d'appui (3), éléments qui maintiennent la pièce de raccordement (2) et le palier d'appui (3) distants l'une de l'autre dans le sens de la hauteur, de sorte que la pièce de raccordement (2) et le palier d'appui (3) sont immobilisables l'une par rapport à l'autre sur des positions inclinées différentes, et sachant que les éléments d'écartement (8) présentent chacun deux parties, dont une, dite partie de raccordement (10), est disposée contre la pièce de raccordement (2) et l'autre, dite partie d'appui (9), est disposée contre le palier d'appui (3), et qui appliquent l'une contre l'autre par des surfaces de contact, sachant que les surfaces de contact décrivent ensemble une ligne de contact au tracé essentiellement incurvé partant d'un point central en direction de deux extrémités situées à une hauteur différente de ce dernier, sachant qu'une partie de raccordement (10) est configurée en géométrie d'écartement forcé qui forme une surface regardant vers le haut, surface qui forme la surface de contact de la partie de raccordement (10), sachant que la partie de raccordement (10) s'étend sous la partie centrale du palier d'appui (9), sur au moins sa demi-longueur latérale, dans une première direction dite direction longitudinale, et sachant que les parties de raccordement (10) sont disposées comme des éléments séparés déplaçables dans le sens longitudinal dans la pièce de raccordement (2), **caractérisée en ce que** la partie supérieure comprend un élément de verrouillage (20) et que les surfaces de contact de la partie d'appui (9) et de la partie de raccordement (10) présentent des profils réciproquement complémentaires, que dans différentes positions angulaires que prend le palier d'appui (3) par rapport à la pièce de raccordement (2), des déformations concaves supérieures (17) de la partie d'appui (9) et des déformations concaves inférieures (18) de la partie de raccordement (10) créent un contour réceptacle (19) conjoint dans lequel l'élément de verrouillage (20) peut être mis en place.

2. Partie supérieure selon la revendication 1, **caractérisée en ce qu'**une pièce intermédiaire est disposée sous une partie de raccordement (10).

3. Partie supérieure selon la revendication 2, **caractérisée en ce que** des pièces intermédiaires sont disposées à la même hauteur sous les deux parties de raccordement (10).

4. Partie supérieure selon la revendication 2, **caractérisée en ce que** des pièces intermédiaires sont disposées à des hauteurs différentes sous les deux parties de raccordement (10).

5. Partie supérieure selon l'une des revendications précédentes, **caractérisée en ce que** les profils (16) de la partie d'appui (9) et de la partie de raccordement (10) créent chacune plusieurs déformations concaves (17, 18) et qu'elles sont disposées mutuellement décalées de sorte que lorsque le palier d'appui (3) se trouve dans différentes positions angulaires par rapport à la pièce de raccordement (2), seulement une unique déformation concave supérieure (17) d'une pièce d'appui (9) et une unique déformation concave inférieure (18) d'une partie de raccordement (10) créent un contour réceptacle.

6. Partie supérieure selon l'une des revendications précédentes, **caractérisée en ce qu'**en plus des éléments d'écartement (8) évoqués sont disposés des appuis contre les extrémités du palier d'appui (3), entre la pièce de raccordement (2) et le palier d'appui (3).

7. Partie supérieure selon l'une des revendications précédentes, **caractérisée en ce que** la pièce de raccordement (2) présente un cadre (7) en saillie vers le haut entourant périmétriquement l'ouverture (5) d'avaloir, et que le palier d'appui (3) présente une surface d'appui couchée ainsi que des pieds (14) s'étendant vers le bas à partir de là, pieds qui à l'intérieur du cadre plongent dans la pièce de raccordement (2).

8. Partie supérieure selon la revendication 7, **caractérisée en ce que** contre les côtés longitudinaux du palier d'appui (3), une aile de guidage (12) respective fait saillie vers l'extérieur et vers le bas, et qu'elle passe par-dessus le bord supérieur du cadre (7) se trouvant contre la pièce de raccordement (2).

9. Avaloir comprenant une partie supérieure (1) configurée selon l'une des revendications précédentes.
